# EUROPÄISCHE PATENTANMELDUNG

(11) **EP 2 633 945 A1**
(43) Veröffentlichungstag der Anmeldung: **04.09.2013**
(21) Anmeldenummer: 13157015.2
(22) Anmeldetag: 27.02.2013
(51) Int. Cl.: B23Q 3/06, B23Q 3/10

(54) **Spannvorrichtung**

(30) Priorität: 28.02.2012 AT 2502012
(71) Anmelder: ABBA-Fertigungstechnik & Co KG, 4870 Vöcklamarkt (AT)
(72) Erfinder: Lenzkes, Karl-Heinz, 58513 Lüdenscheid (DE)
(74) Vertreter: KLIMENT & HENHAPEL

(57) **Zusammenfassung**

Spannvorrichtung zum Festspannen von Werkstücken auf einem, mit T-Nuten versehenen Spanntisch umfassend einen Grundkörper (1) und eine Spannbacke (2), wobei der Grundkörper (1) eine Auflagefläche (10) aufweist, die parallel zu Klemmflächen (11) eines Nutensteins (3) verläuft, der zur Befestigung des Grundkörpers (1) in den T-Nuten des Spanntisches über zumindest eine, die Auflagefläche (10) durchsetzende Befestigungsschraube (7) mit dem Grundkörper (1) verbindbar ist. Erfindungsgemäß ist hierbei vorgesehen, dass zumindest eine der Befestigungsschrauben (7) zur Vertikalen auf die Auflagefläche (10) geneigt geführt ist. Die Befestigung einer erfindungsgemäßen Spannvorrichtung an einem Spanntisch wird somit sehr verbessert, da aufgrund der gekippten Anordnung der Befestigungsschrauben (7) die Klemmkraft auch über eine Horizontalkomponente verfügt, die Horizontalbelastungen des Grundkörpers (1) im Zuge des Festklemmens eines Werkstückes gut aufnimmt.

## Beschreibung

Die Erfindung betrifft eine Spannvorrichtung zum Festspannen von Werkstücken auf einem, mit T-Nuten versehenen Spanntisch umfassend einen Grundkörper und eine Spannbacke, wobei der Grundkörper eine Auflagefläche aufweist, die parallel zu Klemmflächen eines Nutensteins verläuft, der zur Befestigung des Grundkörpers in den T-Nuten des Spanntisches über zumindest eine, die Auflagefläche durchsetzende Befestigungsschraube mit dem Grundkörper verbindbar ist, gemäß dem Oberbegriff von Anspruch 1.

Spannvorrichtungen der gattungsgemäßen Art dienen zum Festspannen eines Werkstückes auf einem Spanntisch, wobei die Spannvorrichtung über den Grundkörper am Spanntisch fixiert wird, und das Werkstück mithilfe der Spannbacke eingespannt wird. Hierfür ist die Spannbacke am Grundkörper zumeist beweglich gehalten und etwa als verschwenkbare oder verschiebbare Spannbacke, oder auch als Teil eines, am Grundkörper angeordneten Spannhebels ausgeführt. Der Grundkörper wird über Nutensteine am Spanntisch befestigt, deren Geometrie an die Geometrie der T-Nuten des Spanntisches angepasst ist.

Die Nutensteine sind in der Regel in würfelähnlicher Form ausgeführt und über eine Befestigungsschraube am Grundkörper gehalten. Die Befestigungsschraube durchsetzt hierfür eine entsprechend gestaltete Bohrung des Grundkörpers, und greift in eine Gewindebohrung des Nutensteins ein. Die Gewindebohrung kann dabei durchgehend, oder auch als Sackbohrung ausgeführt sein. Die Bohrungen im Grundkörper für die Befestigungsschrauben können etwa als Stufenbohrungen ausgeführt sein, sodass sich der Kopf der Befestigungsschraube an der Stufe abstützt und der Schaft der Befestigungsschrauben den Grundkörper durchdringt. Durch Verdrehen der Befestigungsschrauben kann somit der Abstand des Nutensteins, insbesondere seiner Klemmflächen, zur Auflagefläche des Grundkörpers verändert werden, sobald der Nutenstein in eine T-Nute des Spanntisches eingesetzt wurde. Die Spannvorrichtung klemmt den Spanntisch somit zwischen der Auflagefläche des Grundkörpers und den Klemmflächen des Nutensteins ein.

Um den Grundkörper verdrehsicher am Spanntisch zu fixieren, sind in der Regel ein oder zwei Nutensteine vorgesehen, die in einem Abstand zueinander mithilfe von Befestigungsschrauben am Grundkörper angeordnet sind. In manchen Ausführungsformen gattungsgemäßer Spannvorrichtungen ist auch die Spannbacke mit einem Nutenstein versehen, etwa bei Flachspannern, bei denen die Spannbacke als verschwenkbare Spannbacke am Grundkörper gehalten ist und im Zuge der Befestigung am Spanntisch durch Festziehen der Befestigungsschraube für jenen Nutenstein, der der Spannbacke zugeordnet ist, verschwenkt wird.

Um ein Werkstück mithilfe einer oder mehrerer gattungsgemäßer Spannvorrichtungen am Spanntisch festzuspannen, werden zunächst die Nutensteine an einer Randkante des Spanntisches in die T-Nuten eingefädelt, um den Grundkörper in weiterer Folge an das Werkstück heranführen zu können. Die Fixierung des Grundkörpers am Spanntisch erfolgt in unmittelbarer Nähe zum Werkstück durch Festziehen der Befestigungsschrauben am Grundkörper, wodurch er mithilfe der Nutensteine am Spanntisch fest geklemmt wird. In weiterer Folge kann die Spannbacke relativ zum Grundkörper verstellt werden, also je nach Ausführungsform über Spannschrauben und dergleichen verschwenkt oder verschoben werden, um die Spannbacke in Anlage mit einem Werkstück zu bringen und es schließlich einzuspannen.

Beim Festziehen der Spannschraube wird dabei die Spannvorrichtung durch horizontale Kräfte stark belastet, sodass die Spannvorrichtung, insbesondere der Grundkörper, am Spanntisch entsprechend zu befestigen ist. Es zeigt sich nun in der Praxis, dass sich auch bei gewissenhaftem Anziehen der Befestigungsschrauben der Grundkörper mitunter lockert und im schlimmsten Fall das Werkstück freigegeben wird.

Es ist daher das Ziel der Erfindung die Befestigung einer gattungsgemäßen Spannvorrichtung an einem Spanntisch zu verbessern.

Dieses Ziel wird durch die Maßnahmen von Anspruch 1 erreicht. Anspruch 1 bezieht sich auf eine Spannvorrichtung zum Festspannen von Werkstücken auf einem, mit T-Nuten versehenen Spanntisch umfassend einen Grundkörper und eine Spannbacke, wobei der Grundkörper eine Auflagefläche aufweist, die parallel zu Klemmflächen eines Nutensteins verläuft, der zur Befestigung des Grundkörpers in den T-Nuten des Spanntisches über zumindest eine, die Auflagefläche durchsetzende Befestigungsschraube mit dem Grundkörper verbindbar ist. Erfindungsgemäß ist hierbei vorgesehen, dass zumindest eine der Befestigungsschrauben zur Vertikalen auf die Auflagefläche geneigt geführt ist. Es hat sich hierfür gezeigt, dass eine solche, geneigte Anordnung der Befestigungsschrauben die Befestigung einer Spannvorrichtung an einem Spanntisch sehr verbessert.

Die Befestigung des Grundkörpers am Spanntisch beruht im Wesentlichen auf der Klemmkraft, die zwischen den Klemmflächen der Nutensteine und der Auflagefläche des Grundkörpers erzeugt wird. Diese Klemmkraft wirkt bei vertikal angeordneten Befestigungsschrauben im Wesentlichen vertikal auf den Grundkörper. Bei gekippter Anordnung der Befestigungsschrauben verfügt die Klemmkraft jedoch auch über eine Horizontalkomponente, die Horizontalbelastungen des Grundkörpers im Zuge des Festklemmens eines Werkstückes gut aufnimmt. Diese Wirkung wird verbessert, indem gemäß einer bevorzugten Ausführungsform der Schraubenkopf der zumindest einen, geneigt geführten Befestigungsschraube in eine, von der Spannbacke abgewandte Richtung geneigt ist.

Die Erfindung wird im Folgenden anhand eines Ausführungsbeispiels mithilfe der beiliegenden Zeichnungen näher erläutert. Es zeigen hierbei die
Fig. 1 eine perspektivische Ansicht einer Ausführungsform einer erfindungsgemäßen Spannvorrichtung,
Fig. 2 eine Seitenansicht einer erfindungsgemäßen Spannvorrichtung gemäß Fig. 1,
Fig. 3 die erfindungsgemäße Spannvorrichtung gemäß Fig. 1 von vorne gesehen,
Fig. 4 eine Ansicht einer erfindungsgemäßen Spannvorrichtung gemäß Fig. 1 von oben gesehen, und die
Fig. 5 einen Aufriss des Grundkörpers einer erfindungsgemäßen Spannvorrichtung gemäß Fig. 1.

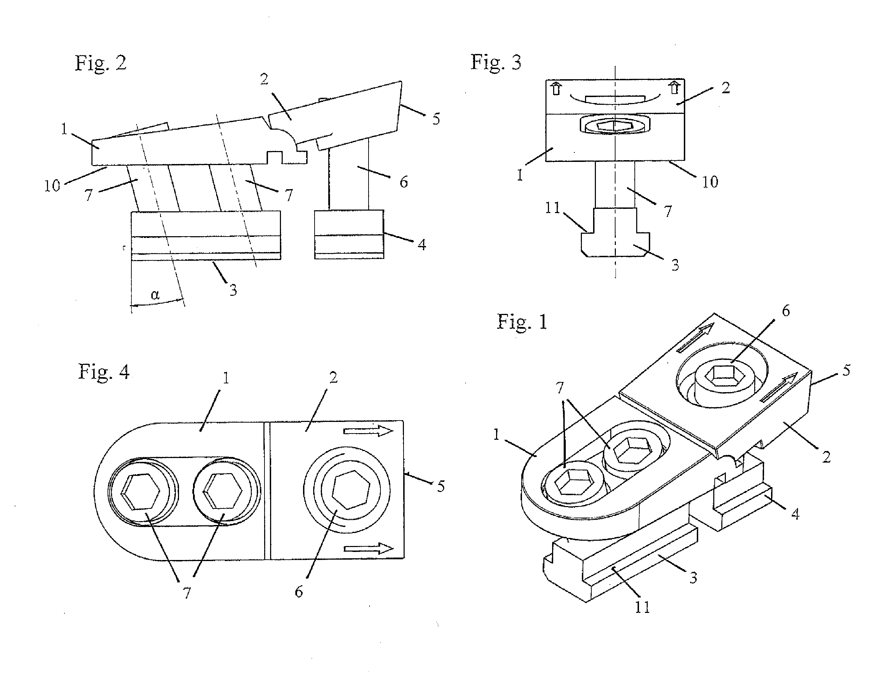

Zunächst wird auf die Fig. 1 Bezug genommen, in der eine perspektivische Ansicht einer Ausführungsform einer erfindungsgemäßen Spannvorrichtung mit einem Grundkörper 1 und einer Spannbacke 2 dargestellt ist. Das gezeigte Ausführungsbeispiel bezieht sich auf eine Spannvorrichtung, bei der die Spannbacke 2 als verschwenkbare Spannbacke am Grundkörper 1 gehalten ist. Eine solche Spannvorrichtung wird auch als Flachspanner bezeichnet, wobei das Werkstück über die Spannfläche 5 mithilfe der Spannschraube 6 am Spanntisch (in den Fig. 1 bis 5 nicht dargestellt) festgespannt wird. Aufgrund der schrägen Ausführung der Spannfläche 5 wird dabei die Spannvorrichtung beim Festziehen der Spannschraube 6 auch durch horizontale Kräfte belastet, sodass die Spannvorrichtung, insbesondere der Grundkörper 1, am Spanntisch entsprechend zu befestigen ist. Der Grundkörper 1 liegt dabei über seine Auflagefläche 10 am Spanntisch auf.

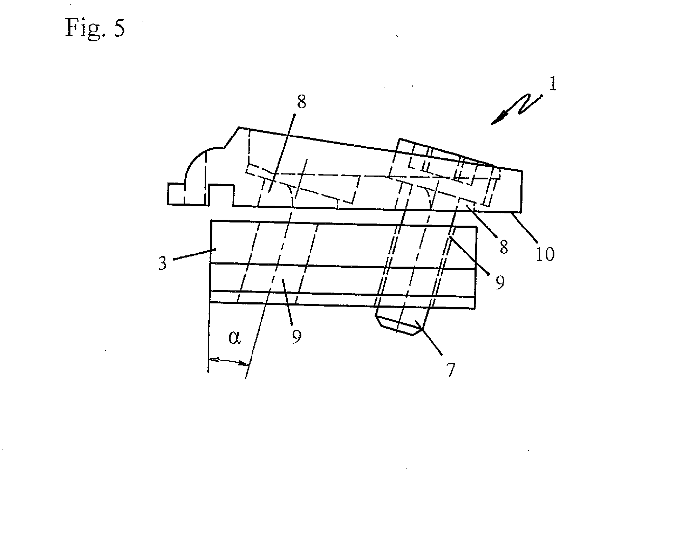

Die Befestigung der Spannvorrichtung erfolgt einerseits über die Spannbacke 2 mithilfe der Spannschraube 6 und eines, der Spannbacke 2 zugeordneten Nutensteins 4 an der Spannschraube 6, und andererseits über den Grundkörper 1. Der Grundkörper 1 weist hierfür Befestigungsschrauben 7 auf, die entsprechende Bohrungen 8 im Grundkörper 1 durchsetzen (siehe insbesondere auch Fig. 5). Die Befestigungsschrauben 7 greifen des Weiteren in Gewindebohrungen 9 eines, dem Grundkörper 1 zugeordneten Nutensteins 3 ein. Durch Verdrehen der Befestigungsschrauben 7 kann somit der Abstand des Nutensteins 3, insbesondere seiner Klemmflächen 11, zur Auflagefläche 10 des Grundkörpers 1 verändert werden, sobald der Nutenstein 3 in eine T-Nute des Spanntisches eingesetzt wurde. Die Spannvorrichtung klemmt den Spanntisch somit zwischen der Auflagefläche 10 und den Klemmflächen 11 des Nutensteins 3 ein.

Der, der Spannbacke 2 zugeordnete Nutenstein 4 weist etwa eine würfelartige Form auf. Der, dem Grundkörper 1 zugeordnete Nutenstein 3 kann hingegen als länglicher Nutenstein 3 ausgeführt sein, der im gezeigten Ausführungsbeispiel über zwei Befestigungsschrauben 7 mit dem Grundkörper 1 verbunden ist. Da dieser länglich ausgeführte Nutenstein 3 über zwei Befestigungsschrauben 7 mit dem Grundkörper 1 verbunden ist, kann zwar dessen Abstand zur Auflagefläche 10 des Grundkörpers 1 durch Betätigung der Befestigungsschrauben 7 verändert werden, er kann aber nicht mehr relativ zum Grundkörper 1 verdreht werden. Dadurch wird das Einfädeln in die T-Nuten eines Spanntisches sehr erleichtert, da kein manuelles Ausrichten des Nutensteins 3 mehr erfolgen muss, sobald der, der Spannbacke 2 zugeordnete Nutenstein 4 eingefädelt wurde.

Wie insbesondere der Fig. 5 entnommen werden kann, sind die Befestigungsschrauben 7 über entsprechende Bohrungen 8 im Grundkörper 1, sowie über entsprechende Gewindebohrungen 9 des Nutensteins 3 im gezeigten Ausführungsbeispiel in einem spitzen Winkel α schräg zur Vertikalen auf die Auflagefläche 10 geführt. Der spitze Winkel α wird dabei von der Achse der Befestigungsschraube 7 und der Vertikalen auf die Auflagefläche 10 eingeschlossen, wobei die Achse der Befestigungsschraube 7 und die Vertikale auf die Auflagefläche 10 in einer Ebene liegen, die auch die Längsachse des Nutensteins 3 enthält. Die Schrägstellung der Achse der Befestigungsschraube 7 ist dabei vorzugsweise so gewählt, dass der Schraubenkopf der zumindest einen, geneigt geführten Befestigungsschraube 7 in eine, von der Spannbacke 2 abgewandte Richtung geneigt ist, wie etwa anhand der Fig. 2 ersichtlich ist.

Die schräge Führung der Bohrungen 8 und der Gewindebohrungen 9 ist insbesondere auch aus der Fig. 5 ersichtlich, die lediglich eine Befestigungsschraube 7 zeigt, es ist aber selbstredend, dass in der praktischen Anwendung zwei Befestigungsschrauben 7 verwendet werden, die in den Bohrungen 8 bzw. den Gewindebohrungen 9 eingesetzt sind. Die Fig. 3 zeigt insbesondere den T-förmigen Querschnitt des Nutensteins 3, dessen Geometrie der Geometrie der T-Nuten eines Spanntisches entspricht, um beim Einschieben in die T-Nuten des Spanntisches eine formschlüssige Verbindung zu gewährleisten. Die Fig. 4 zeigt eine Ansicht der erfindungsgemäßen Spannvorrichtung von oben gesehen.

Die Befestigung einer erfindungsgemäßen Spannvorrichtung an einem Spanntisch wird somit sehr verbessert, da aufgrund der gekippten Anordnung der Befestigungsschrauben 7 die Klemmkraft auch über eine Horizontalkomponente verfügt, die Horizontalbelastungen des Grundkörpers im Zuge des Festklemmens eines Werkstückes gut aufnimmt.

## Patentansprüche

1. Spannvorrichtung zum Festspannen von Werkstücken auf einem, mit T-Nuten versehenen Spanntisch umfassend einen Grundkörper (1) und eine Spannbacke (2), wobei der Grundkörper (1) eine Auflagefläche (10) aufweist, die parallel zu Klemmflächen (11) eines Nutensteins (3) verläuft, der zur Befestigung des Grundkörpers (1) in den T-Nuten des Spanntisches über zumindest eine, die Auflagefläche (10) durchsetzende Befestigungsschraube (7) mit dem Grundkörper (1) verbindbar ist, **dadurch gekennzeichnet, dass** zumindest eine der Befestigungsschrauben (7) zur Vertikalen auf die Auflagefläche (10) geneigt geführt ist.

2. Spannvorrichtung nach Anspruch 1, **dadurch gekennzeichnet, dass** der Schraubenkopf der zumindest einen, geneigt geführten Befestigungsschraube (7) in eine, von der Spannbacke (2) abgewandte Richtung geneigt ist.
